# EUROPÄISCHE PATENTSCHRIFT

(11) **EP 3 224 731 B1**
(45) Veröffentlichungstag und Bekanntmachung des Hinweises auf die Patenterteilung: **05.08.2020**
(21) Anmeldenummer: 15802024.8
(22) Anmeldetag: 24.11.2015
(51) Int. Cl.: G06F 13/40, H04L 12/46

(54) **VERFAHREN UND VORRICHTUNG ZUR WEITERLEITUNG VON DATEN**
METHOD AND APPARATUS FOR FORWARDING DATA
PROCÉDÉ ET DISPOSITIF DE TRANSMISSION DE DONNÉES

(30) Priorität: 27.11.2014 DE 102014117381
(43) Veröffentlichungstag der Anmeldung: 04.10.2017
(73) Patentinhaber: Carl Zeiss Microscopy GmbH, 07745 Jena (DE)
(72) Erfinder: KÜHM, Andreas, 07774 Dornburg-Camburg (DE); PRESSER, Nico, 07743 Jena (DE); KÖBE, Hardy Thomas, 07747 Jena (DE); ENGEL, Jörg, 07570 Weida (DE)
(74) Vertreter: Sticht, Andreas
(86) Internationale Anmeldenummer: PCT/EP2015/077509
(87) Internationale Veröffentlichungsnummer: WO 2016/083378

(56) Entgegenhaltungen:
- EP-A2- 0 588 104
- US-B2- 7 586 925

## Beschreibung

In vielen Systemen werden von verschiedenen Komponenten eines Systems Datenströme erzeugt, wobei jeder dieser Datenströme Daten für verschiedene Empfängerkomponenten enthalten kann. Derartige Datenströme können beispielsweise zeitkritische Steuerdaten und/oder Steuerbefehle enthalten, wobei die Weiterleitung an verschiedene Empfänger teilweise synchron zu erfolgen hat. Ein Beispiel für derartige Systeme sind moderne Mikroskopsysteme, bei welchen von verschiedenen Hardwarekomponenten des Mikroskopsystems Datenströme, umfassend Steuerdaten oder Steuerbefehle, erzeugt werden, welche dann an verschiedene Empfängerkomponenten weitergeleitet werden müssen. Als Beispiel kann ein Laserscanning-Mikroskopsystem dienen, bei welchem Steuerbefehle beispielsweise sowohl an einen Scannerspiegel zum Steuern einer Bewegung des Scannerspiegels als auch an eine jeweilige Bildaufnahmeeinrichtung geschickt werden, wobei die Bewegung des Scannerspiegels und die Bildaufnahme synchron zueinander erfolgen soll. Derartige Steuerbefehle können noch dazu aus verschiedenen Quellen stammen. Dieses System dient jedoch nur als Beispiel, und entsprechende Erfordernisse können auch in anderen Systemen auftreten. Beispiele für ein derartiges Mikroskopsystem und Datenströme sind in der DE 10 2009 040839 A1 oder der DE 10 2008 009634 A1 beschrieben.

Allgemein gesprochen müssen also bei manchen Anwendungen Daten von n Datenquellen, n ≥ 1, auf m Datensenken, m ≥ 1, verteilt werden. Herkömmliche reine Software-Implementierungen sind durch die benötigte Rechenzeit (z.B. CPU-Auslastung) hinsichtlich des Datendurchsatzes beschränkt, weil ein hoher Umsortierungs- und Synchronisationsaufwand entsteht. Dadurch ergibt sich bei herkömmlichen Lösungen die Notwendigkeit, große Datenpuffer vorzuhalten, wobei durch die großen Datenpuffer schnelle Reaktionen auf Ereignisse nahezu unmöglich sind. Insbesondere ergibt sich beispielsweise durch die Datenpuffer eine relativ große Mindestlatenzzeit, bis insbesondere externe Ereignisse in einer derartigen Software erfasst und bearbeitet werden können. Bei herkömmlichen Lösungen, bei denen die Datenweiterleitung an einer zentralen Stelle in Software gebündelt wird, können sich weiterhin Probleme bei der Synchronisation und Priorisierung der einzelnen Datenquellen untereinander ergeben. Sollte eine derartige herkömmliche Software-Lösung nicht in der Lage sein, rechtzeitig alle Quellen bei einer Bündelung und Weiterleitung der Daten zu bedienen, so kann es passieren, dass Datenausgänge zum Ausgeben der Ausgangsdatenströme ihre Synchronität untereinander verlieren, was im Extremfall die Daten für bestimmte Anwendungen unverwendbar macht und bis zu einem Defekt von verwendeter Hardware führen kann.

Die US 7,586,925 B2 offenbart einen Switch, welcher zwischen einem paketbasierten Netzwerk, in welchem Pakete asynchron übertragen werden, und einem schaltungsbasierten Netzwerk, welches üblicherweise synchron arbeitet, geschaltet ist. Dieses Dokument benutzt eine Synchronisationsmarkierung, welche benutzt wird, um zu bestimmen, in welche Synchronisationsposition innerhalb eines bestimmten Ausgabepuffers die jeweiligen Sub-Pakete geschrieben werden. In einem Beispiel sind dabei jedem Zeitschlitz des jeweiligen Ausgabepuffers vier Sub-Pakete zugeordnet.

Die EP 05 888 104 A2 offenbart einen weiteren Switch.

Es ist daher eine Aufgabe der vorliegenden Anmeldung, Verfahren und Vorrichtungen zur Verteilung von einer Vielzahl von Eingangsdatenströmen auf eine Vielzahl von Ausgangsdatenströmen bereitzustellen, bei welchen die oben beschriebenen Probleme oder ein Teil hiervon beseitigt oder zumindest abgemildert ist.

Diese Aufgabe wird gelöst durch eine Weiterleitungseinrichtung nach Anspruch 1 und ein Verfahren nach Anspruch 5. Die Unteransprüche definieren weitere Ausführungsbeispiele sowie ein Mikroskopsystem mit einer derartigen Weiterleitungseinrichtung.

Gemäß einem ersten Aspekt wird ein Verfahren zur Weiterleitung von Daten bereitgestellt, umfassend:
Bereitstellen einer Vielzahl von Eingangsdatenströmen an die Weiterleitungseinrichtung wie unten beschrieben, wobei zumindest manche der Eingangsdatenströme Synchronisationsmarker umfassen, welche Daten der Eingangsdatenströme in einem gemeinsamen Zeitabschnitt auszugeben sind, und
Verteilen synchron auszugebender Daten der Eingangsdatenströme auf eine Vielzahl von Ausgangsdatenströmen durch die Weiterleitungseinrichtung auf Basis der Synchronisationsmarker.

Die Verwendung von Synchronisationsmarkern in den Eingangsdatenströmen erlaubt dabei eine zumindest teilweise parallele Verarbeitung und/oder eine einfache Synchronisierung der Ausgangsdatenströme.

Das Verteilen erfolgt dabei derart, dass Daten, die in einem bestimmten Zeitabschnitt zu senden sind, in allen Ausgangsdatenströmen, denen diese Daten zuzuordnen sind, in einem gleichen Zeitabschnitt bereitgestellt werden.

Das Bereitstellen der Eingangsdatenströme kann dabei ein Speichern der Eingangsdatenströme in einem jeweils zugeordneten Speicher umfassen.

Das Verfahren kann insbesondere ein sukzessives Auslesen der Vielzahl von Eingangsdatenströmen, wobei jeweils aus jedem Eingangsdatenstrom einem Synchronisationsmarker zugeordnete Daten ausgelesen werden, und ein Verteilen der so ausgelesenen Daten auf die Ausgangsdatenströme umfassen.

Das sukzessive Auslesen und das Verteilen kann dann jeweils für einen jeweiligen nächsten Synchronisationsmarker der Eingangsdatenströme wiederholt werden, z.B. bis alle anstehenden Daten auf die Ausgangsdatenströme verteilt wurden.

Das sukzessive Auslesen kann dabei für verschiedene Gruppen von Eingangsdatenströmen parallel erfolgen.

Das Verfahren kann zudem ein Auffüllen von Zeitabschnitten der Ausgangsdatenströme mit nicht synchron zu übertragenen Daten umfassen.

Dabei kann das Auffüllen parallel für alle Ausgangsdatenströme erfolgen.

Das Auffüllen kann dabei derart erfolgen, dass Daten der Eingangsdatenströme, welche in mehreren Ausgangsdatenströmen bereitzustellen sind, in den Ausgangsdatenströmen in einander entsprechenden Zeitabschnitten bereitgestellt werden.

Eine Datenverarbeitung, z.B. die oben erläuterten Vorgänge, kann für die Vielzahl von Ausgangsdatenströmen zumindest teilweise parallel erfolgen, d.h. es können für jeden Ausgangsdatenstrom eigene Verarbeitungseinrichtungen bereitgestellt werden, welche z.B. die oben erläuterten Vorgänge durchführen. Andere Vorgänge der Datenverarbeitung können auch für mehrere Ausgangsdatenströme durch gemeinsame Verarbeitungseinrichtungen erfolgen.

Die Daten können dabei Daten eines Mikroskopsystems sein.

Die Daten können Befehle, z.B. zur Steuerung von Komponenten eines Systems wie eines Mikroskopsystems umfassen. Die Befehle können auch Befehle zur Synchronisation der Eingangsdatenströme und/oder Ausgangsdatenströme untereinander und/oder zu externen Ereignissen umfassen.

Die Daten der Eingangsdatenströme können jeweils Informationen aufweisen, welchem Ausgangsdatenstrom sie zuzuordnen sind.

Gemäß einem zweiten Aspekt wird eine Weiterleitungseinrichtung mit einer Vielzahl von Ausgängen bereitgestellt, wobei die Weiterleitungseinrichtung eingerichtet ist, eine Vielzahl von Eingangsdatenströmen zu empfangen, wobei zumindest manche der Eingangsdatenströme Synchronisationsmarker umfassen, welche Daten der Eingangsdatenströme umfassen, welche angeben, welche Daten der Eingangsdatenströme in einem gemeinsamen Zeitabschnitt auszugeben sind, wobei die Weiterleitungseinrichtung weiter eingerichtet ist, eine Vielzahl von Ausgangsdatenströmen auf Basis der Eingangsdatenströme und der Synchronisationsmarker an den Ausgängen bereitzustellen,
weiter umfassend eine Vielzahl von Speichern, wobei jeder Speicher der Vielzahl von Speichern zum Speichern von Daten von einem der Eingangsdatenströme eingerichtet ist, weiter umfassend mindestens eine Sequenzereinrichtung, welche eingerichtet ist, sukzessive Daten, welche einem Synchronisationsmarker zugeordnet sind, aus der Sequenzereinrichtung zugeordneten Speichern der Speicher auszulesen, wobei die Weiterleitungseinrichtung weiterhin für jeden der Ausgänge einen Ausgangspuffer umfasst, wobei die Sequenzereinrichtung eingerichtet ist, die gelesenen Daten in diejenigen Ausgangspuffer zu schreiben, deren Ausgangsanschlüssen die Daten zuzuordnen sind, und weiter umfassend mindestens eine weitere Sequenzereinrichtung, welche eingerichtet ist, nicht synchron zu übertragende Daten aus der Sequenzereinrichtung zugeordneten Speichern der Speicher auszulesen und in weitere Ausgabepuffer zu schreiben, wobei jeweils ein weiterer Ausgabepuffer einem der Ausgänge zugeordnet ist, wobei die Weiterleitungseinrichtung weiter für jeden Ausgang eine Kombinationseinrichtung
umfasst, wobei jede der Kombinationseinrichtungen eingerichtet ist, Daten aus dem Ausgabepuffer und dem weiteren Ausgabepuffer, welche einem jeweiligen Ausgang zugeordnet sind, zu einem Ausgangsdatenstrom zu kombinieren.

Mehrere Speicher können auch als verschiedene Bereiche in einem Speicher implementiert sein.

Es können auch mehr als eine Sequenzereinrichtung und/oder mehr als eine weitere Sequenzereinrichtung bereitgestellt sein, welchen dann jeweils einem Teil der Speicher zugeordnet ist.

Die Weiterleitungseinrichtung kann zumindest teilweise als Hardware implementiert sein.

Die Hardware kann dabei beispielsweise eine anwendungsspezifische integrierte Schaltung (ASIC, vom Englischen "application-specific integrated circuit"), oder eine feldprogrammierbare Gatteranordnung (FPGA) umfassen.

Durch eine derartige Hardwareimplementierung kann eine weitere Beschleunigung erreicht werden.

Gemäß einem dritten Aspekt wird ein Mikroskopsystem mit einer solchen Weiterleitungseinrichtung bereitgestellt.

Die Erfindung wird nachfolgend unter Bezugnahme auf die beigefügte Zeichnungen anhand von Ausführungsbeispielen näher erläutert. Es zeigen:
Fig. 1 ein System mit einer Weiterleitungseinrichtung gemäß einem Ausführungsbeispiel,
Fig. 2 eine schematische Darstellung eines Systems gemäß einem Ausführungsbeispiel,
Fig. 3 eine detaillierte Darstellung einer Weiterleitungseinrichtung gemäß einem Ausführungsbeispiel,
Fig. 4 ein Flussdiagramm zur Veranschaulichung eines Verfahrens gemäß einem Ausführungsbeispiel, und
Fig. 5 und 6 Beispiele für Datenströme zur Veranschaulichung der Funktionsweise von Ausführungsbeispielen.

Im Folgenden werden verschiedene Ausführungsbeispiele unter Bezugnahme auf die beigefügten Zeichnungen näher erläutert. Diese Ausführungsbeispiele dienen lediglich der Veranschaulichung und sind nicht als einschränkend auszulegen. So ist beispielsweise eine Beschreibung eines Ausführungsbeispiels mit einer Vielzahl von Merkmalen oder Elementen nicht dahingehend auszulegen, dass alle diese Merkmale oder Elemente zur Implementierung des Ausführungsbeispiels notwendig sind. Vielmehr können andere Ausführungsbeispiele weniger Merkmale oder Elemente, alternative Merkmale oder Elemente und/oder zusätzliche Merkmale oder Elemente aufweisen. Merkmale oder Elemente verschiedener Ausführungsbeispiele können miteinander kombiniert werden, sofern nichts anderes angegeben ist.

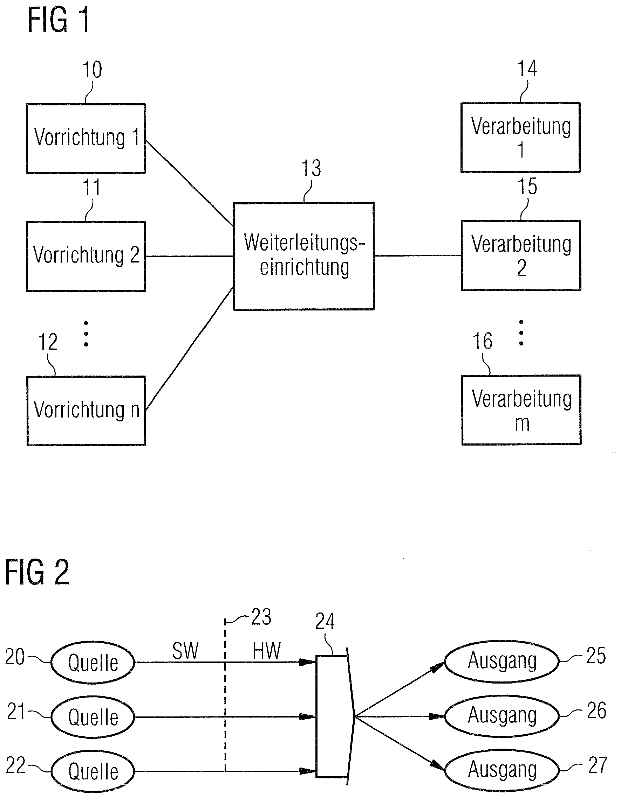

In Fig. 1 ist ein System mit einer Weiterleitungseinrichtung 13 gemäß einem Ausführungsbeispiel dargestellt. Die Weiterleitungseinrichtung 13 empfängt Eingangsdatenströme von einer Vielzahl von Vorrichtungen 10, 11, 12. Während drei Vorrichtungen 10, 11, 12 dargestellt sind, kann allgemein eine beliebige Anzahl n von Vorrichtungen 10-12, insbesondere n ≥ 2, bereitgestellt sein. Auch können von einer einzigen Vorrichtung mehrere Datenströme ausgehen. Die Vorrichtungen 10-12 können dabei Hardware-Module, Software-Module oder Kombinationen hiervon aufweisen, um die Eingangsdatenströme zu erzeugen.

Die Weiterleitungseinrichtung 13 leitet Daten aus den von den Vorrichtungen 10-12 empfangenen Eingangsdatenströmen an Verarbeitungseinrichtungen 14-16 weiter, wobei allgemein eine beliebige Anzahl m von Verarbeitungseinrichtungen 14-16 bereitgestellt sein kann. m kann insbesondere ≥ 2 sein, ist jedoch nicht hierauf beschränkt. Es können auch mehrere Ausgangsdatenströme zu einer einzigen Verarbeitungseinrichtung weitergeleitet werden, beispielsweise für verschiedene Teile hiervon. Der Begriff "Verarbeitungseinrichtung" deutete dabei an, dass die empfangenen Daten auf irgendeine Weise weiterverarbeitet werden, was auch eine weitere Weiterleitung einschließen kann. Beispielsweise können die Daten auch Steuerdaten umfassen, welche die Verarbeitungseinrichtungen 14-16 steuern. Dabei können Daten der Eingangsdatenströme, welche von den Vorrichtungen 10-12 erzeugt werden, jeweils einem oder mehreren Ausgangsdatenströmen für die Verarbeitungseinrichtungen 14-16 zugeordnet werden. Auch hierfür werden später noch Beispiele erläutert. Die Vorrichtungen 10-12 sowie die Verarbeitungseinrichtungen 14-16 können bei manchen Ausführungsbeispielen Teile eins Mikroskopsystems, beispielsweise eines Laserscanner-Mikroskopsystems sein, wie eingangs erläutert.

Wie später anhand von Beispielen näher erläutert werden wird, weisen bei Ausführungsbeispielen Eingangsdatenströme, die von den Vorrichtungen 10-12 ausgegeben werden, Synchronisationsmarker auf. Anhand dieser Synchronisationsmarker kann die Weiterleitungseinrichtung 13 die Ausgangsdatenströme zur Weiterleitung an die Verarbeitungseinrichtungen 14-16 derart erzeugen, dass die Synchronität von Daten zueinander gewahrt bleibt. Hierfür kann die Weiterleitungseinrichtung 13 insbesondere Daten, welche einander entsprechenden Synchronisationsmarkern zugeordnet sind, in einem gemeinsamen Zeitabschnitt der Ausgangsdatenströme, beispielsweise einem gemeinsamen Taktzyklus, anordnen. Die Weiterleitungseinrichtung 13 kann dabei ganz oder teilweise in Hardware implementiert sein, beispielsweise als feldprogrammierbare Gatteranordnung (FPGA, engl. "field programmable gate array"). Die Erfindung ist jedoch nicht hierauf beschränkt, und bei anderen Ausführungsbeispielen können allgemein Kombinationen aus Software, Hardware und Firmware verwendet werden, um die Weiterleitungseinrichtung zu implementieren.

Fig. 2 zeigt ein System mit einer Weiterleitungseinrichtung 24 gemäß einem weiteren Ausführungsbeispiel. Bei dem Ausführungsbeispiel der Fig. 2 wird eine Vielzahl von Eingangsdatenströmen von einer Vielzahl von Datenquellen 20 bis 22 geliefert. Die Datenquellen 20 bis 22 können beispielsweise den Vorrichtungen 10-12 der Fig. 1 oder Teilen hiervon entsprechen, sind jedoch nicht hierauf begrenzt. Die Eingangsdatenströme können zunächst in Software (SW) verarbeitet werden, bevor sie bei dem Ausführungsbeispiel der Fig. 2 in Hardware (HW), beispielsweise mittels einer als feldprogrammierbaren Gatteranordnung (FPGA) oder einem ASIC implementierten Verteilungseinrichtung 24 auf Ausgänge 25 bis 27 verteilt werden. Die Ausgänge 25 bis 27 können dabei insbesondere Hardware-Ausgänge sein, über welche Daten beispielsweise zu den Verarbeitungseinrichtungen 14-16 der Fig. 1 ausgegeben werden.

Die Verarbeitung in Hardware, welche in Fig. 2 dargestellt ist, kann insbesondere unabhängig von Software mehrere Datenströme von den Quellen 20 bis 22 zeitlich synchronisiert und entsprechend eines Echtzeit-kritischen Zeitregimes zu den Ausgängen 25 bis 27 (Datensenken) ausgeben. Die Datensynchronisierung kann dabei von den Datenströmen selbst, von externen Bedingungen selbst, von externen Bedingungen und/oder von anderen in dem System der Fig. 2 auftretenden zeitlichen Randbedingungen abhängig sein. Derartige Abhängigkeiten können beispielsweise eine Notwendigkeit, Daten bis zu bestimmten periodischen Synchronisationszeitpunkten auszugeben, eine Notwendigkeit, Daten mit möglichst kurzer Latenz zwischen derartigen Synchronisationszeitpunkten auszugeben bzw. in Ausgangsdatenströme einzufügen, eine latenzarme Reaktion auf externe und/oder interne Ereignisse (Trigger) zu erreichen, eine schnelle Reaktion auf applikative Bedingungen einer jeweiligen Anwendung zu erreichen, und/oder eine latenzarme Steuerung und Synchronisation der Daten, insbesondere verschiedener Eingangsdatenströme untereinander zu erreichen, umfassen. Bei Ausführungsbeispielen wird dabei des Weiteren gewährleistet, dass mit geringer Latenzzeit auf eine Vielzahl von Ereignissen (beispielsweise auf echtzeitkritische Daten ohne Synchronisationsanforderungen, externe Bedingungen, interne Marker in den Daten, Taktänderungen eines Taktsignals etc.) unter Wahrung einer Synchronisation reagiert werden kann, ohne dass dabei ein Eingreifen einer Software erforderlich ist. Hierfür können die von den Quellen 20 bis 22 generierten Eingangsdatenströme, wie bereits unter Bezugnahme auf Fig. 1 erläutert, Synchronisationsmarker aufweisen, und die Datenströme können parallel für jeden einzelnen Datenstrom klassifiziert werden (beispielsweise auf Basis der Synchronisationsmarker, und/oder eine Klassifizierung in synchron zu übertragende oder asynchrone Daten). Die klassifizierten Datenströme können dann nachgelagert verarbeitet und auf die Ausgänge 25 bis 27 verteilt werden.

Während in Fig. 2 drei Datenquellen 20 bis 22 und drei Ausgänge 25 bis 27 dargestellt sind, kann jede beliebige Anzahl von Quellen und Ausgängen vorhanden sein, abhängig von Systemanforderungen. Dabei kann die Anzahl der Quellen sich auch von der Anzahl der Ausgänge unterscheiden.

Zu bemerken ist, dass die Anzahl von Datenquellen und die Anzahl von Datensenken, beispielsweise die Anzahl von Quellen 20 bis 22 und die Anzahl aktiver Ausgänge 25 bis 27, auch konfigurierbar sein kann, insbesondere zur Laufzeit konfigurierbar sein kann, d.h. während des Betriebs geändert werden kann. Auch die Datenströme selbst können variieren, beispielsweise hinsichtlich der Anzahl von Daten zwischen Synchronisationsmarkern. Derartige variable Datenströme können bei Ausführungsbeispielen unter Beibehaltung der Synchronität verarbeitet werden.

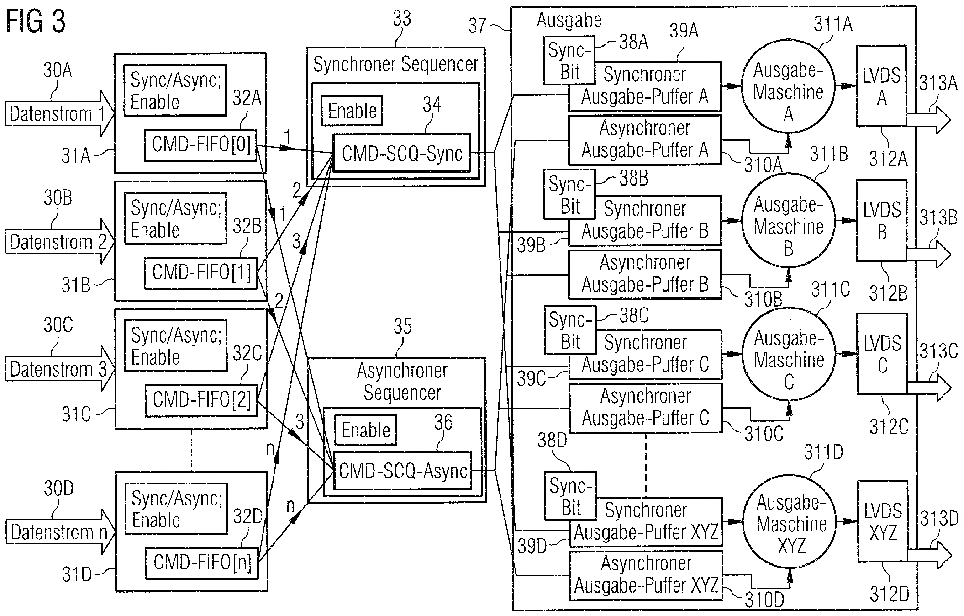

In Fig. 3 ist ein detaillierteres Beispiel einer erfindungsgemäßen Weiterleitungseinrichtung dargestellt. Die Weiterleitungseinrichtung der Fig. 3 kann insbesondere als Software, Hardware, Firmware oder Kombinationen hiervon implementiert sein. Bei einem bevorzugten Ausführungsbeispiel ist die Weiterleitungseinrichtung der Fig. 3 ganz oder teilweise in Hardware, insbesondere in Form einer feldprogrammierbaren Gatteranordnung (FPGA) implementiert.

Bei dem Ausführungsbeispiel der Fig. 3 werden der Weiterleitungseinrichtung eine Vielzahl, insbesondere zwei oder mehr, Eingangsdatenströme 30A bis 30B zugeführt (im Folgenden kollektiv als Eingangsdatenströme 30 bezeichnet). Die Eingangsdatenströme 30 können insbesondere im Wesentlichen wie in den eingangs erwähnten Dokumenten DE 10 2009 040839 A1 oder DE 10 2008 009634 A1 erzeugt werden. Die Eingangsdatenströme 30 können beispielsweise aus einem (nicht dargestellten) Ringspeicher ausgelesen werden, beispielsweise über einen direkten Speicherzugriff (DMA, vom Englischen "Direct memory Access"). Die Eingansdatenströme 30 werden dann bei den dargestellten Ausführungsbeispielen in jeweils zugeordneten Speichern 31A bis 31D abgelegt, kollektiv als Speicher 31 bezeichnet, welche insbesondere FIFO-Einrichtungen 32A bis 32D (First in - First out, d.h. Speicher, bei welchem zuerst geschriebene Daten wieder zuerst ausgelesen werden) umfassen. Die Daten in den Speichern 31 können dabei bei manchen Ausführungsbeispielen - z.B. für jeden der Speicher 31 als ganzes und/oder für die jeweiligen Daten in jedem Speicher separat - als synchrone oder asynchrone Daten gekennzeichnet sein. Bei manchen Ausführungsbeispielen enthält also jeder der Speicher 31 entweder nur synchrone Daten oder nur asynchrone Daten und ist entsprechend gekennzeichnet. Bei anderen Ausführungsbeispielen können die Speicher 31 jeweils synchrone und asynchrone Daten gemischt enthalten, wobei die Daten entsprechend gekennzeichnet sind. Bei wieder anderen Ausführungsbeispielen können die Speicher 31 jeweils getrennte FIFO-Einrichtungen für synchrone und asynchrone Daten umfassen. Dabei sollte bei synchronen Daten insbesondere ein zeitlicher Bezug der Daten zueinander beibehalten werden, während dies bei asynchronen Daten nicht der Fall sein muss. Die Daten der Eingangsdatenströme 30 können dabei Daten, insbesondere auch Befehle umfassen, welche dann an verschiedene Einrichtungen weiterzuleiten sind.

Die Daten aus den Speichern 31 werden dann von einem synchronen Sequenzer 33 und einem asynchronen Sequenzer 35 ausgelesen, wobei der synchrone Sequenzer 33 synchrone Daten ausliest, während der asynchrone Sequenzer 35 Daten ausliest, welche asynchron sind, d.h. Daten, bei welchen die Synchronität nicht wichtig ist und welche auch asynchron zueinander gesendet werden können. Dieses Auslesen kann direkt z.B. über feste Hardwareverbindungen zu jedem Speicher erfolgen. Die synchronen Daten werden z.B. über einen Zwischenspeicher 34 (z.B. FIFO) des synchronen Sequenzers 33 oder auch direkt in weiter unten erläuterte synchrone Ausgabepuffer 39A - 39D geschrieben, und die asynchronen Daten werden z.B. über einen Zwischenspeicher 36 (beispielsweise FIFO) des asynchronen Sequenzers 35 oder auch direkt in asynchrone Ausgabepuffer 310A - 310D geschrieben.

Die synchronen Datenströme werden bei dem dargestellten Ausführungsbeispiel von dem synchronen Sequenzer 33 dabei der Reihe nach aus den Speichern 31 ausgelesen und anhand von Synchronisationsmarkern zu jeweiligen Ausgangsdatenströmen geleitet. Die Ausgangsdatenströme für jeden Ausgangskanal werden dann hierzu in den entsprechenden synchronen Ausgabepuffer 39A bis 39D einer Ausgabeeinrichtung 37 geschrieben, wobei Synchronisations-Bits 38A bis 38D eingeführt werden können. Dabei können die Daten selbst definieren, auf welchen Ausgabepuffer 39A bis 39D sie zu schreiben sind. Bei dem Ausführungsbeispiel der Fig. 3 sind als Beispiel vier Ausgabekanäle dargestellt, welche letztendlich zu vier Ausgangsdatenströmen 313A bis 313D führen. Diese Anzahl ist jedoch wiederum nur als Beispiel zu verstehen, und abhängig von Systemanforderungen und einer gewünschten Implementierung kann im Wesentlichen eine beliebige Anzahl von Ausgangsdatenströmen bereitgestellt werden.

In gleicher Weise teilt auch der asynchrone Sequenzer 35 die aus den Speichern 31A bis 31D ausgelesenen Daten auf die Ausgangsdatenströme auf und schreibt sie in entsprechende asynchrone Ausgabepuffer 310A bis 310D. Zu bemerken ist, dass in Ausführungsbeispielen, bei welchen nur synchrone Daten zu behandeln sind, der asynchrone Sequenzer 35 und die asynchronen Ausgabepuffer 310A bis 310D auch weggelassen werden können.

Insbesondere sortieren die Sequenzer 33, 35 bereits die Daten aus den einzelnen Eingangsdatenströmen und schreiben sie dann in die jeweiligen passenden Ausgangspuffer 39A bis 39D bzw. 310A bis 310D, bei Bedarf unter Wahrung der Synchronität.

Jedem Ausgabekanal ist des Weiteren in der Ausgabeeinrichtung 37 eine Ausgabemaschine 311A bis 311D zugewiesen, welche die synchronen Daten aus dem jeweiligen synchronen Ausgabepuffer 39A bis 39D mit Daten aus dem jeweiligen asynchronen Ausgabepuffer 310A bis 310D auffüllt (beispielsweise falls in einem Zeitabschnitt wie einem Taktzyklus noch Zeit dafür ist), um einen jeweiligen Ausgangsdatenstrom zu erzeugen. Die Ausgangsdatenströme werden dann beispielsweise über Ausgabeschnittstellen 312A bis 312D als Ausgangsdatenströme 313A bis 313D ausgegeben. Die Ausgabeschnittstellen 312A bis 312D können dabei insbesondere LVDS (low-voltage differential signaling) Schnittstellen sein, wobei dies lediglich als Beispiel dient und auch andere Arten von Schnittstellen, Verstärkern oder Ausgangssignalen verwendet werden können.

Dabei können die erwähnten Synchronisationsmarker in den Eingangsdatenströmen insbesondere dazu dienen, diese synchron zueinander abzuarbeiten. Der synchrone Sequenzer 33 arbeitet bei einem Ausführungsbeispiel die synchronen Daten der Eingangsdatenströme der Reihe nach ab, indem er so viele Daten aus dem jeweiligen Eingangsdatenstrom entnimmt bis er einen Synchronisationsmarker vorfindet. Anschließend wir der nächste synchrone Eingangsdatenstrom auf die gleiche Weise aus dem nächsten Speicher 31 ausgelesen. Sind alle Datenströme durchlaufen, hat der synchrone Sequenzer 33 bei manchen Ausführungsbeispielen alle Daten ausgelesen und in die synchronen Ausgabepuffer 39A - 39D geschrieben, welche innerhalb eines bestimmten Zeitabschnittes, beispielsweise innerhalb eines Taktes, in den Ausgangsdatenströmen 313A bis 313D zu versenden sind. Diese Daten werden dann in den jeweiligen synchronen Ausgabepuffer 39A bis 39D des jeweiligen Ausgabekanals geschrieben, über den die jeweiligen Daten auszugeben sind (wobei Daten auch über mehrere Kanäle ausgegeben werden können, beispielsweise wenn sie zu mehreren Datensenken zu senden sind). Dies kann auch als Bündelung der Daten bezeichnet werden. Bei dieser Bündelung wird darauf geachtet, dass möglichst alle zeitlichen Bedingungen, insbesondere eine gewünschte Synchronizität, für einen vorgegebenen Zeitabschnitt (beispielsweise Taktzyklus) eingehalten werden und die Daten in dem vorgesehenen Zeitabschnitt vorliegen (und nicht in einen folgenden Zeitabschnitt verschoben werden). Sollte innerhalb des jeweiligen Zeitabschnitts noch Raum sein, werden wie erwähnt anschließend asynchrone Daten von der jeweiligen Ausgabemaschine 311A bis 311D eingefügt, ohne einen Datenüberlauf in dem jeweiligen Ausgabekanal zu erzeugen (d.h. es werden nicht mehr asynchrone Daten eingefügt als beispielsweise noch in den jeweiligen Zeitabschnitt passen). Zu bemerken ist, dass das Ausführungsbeispiel der Fig. 3 auch arbeiten kann, falls nur asynchrone Daten vorliegen. In diesem Fall ist der synchrone Sequenzer 33 inaktiv, und es arbeitet nur der asynchrone Sequenzer.

Diese Abarbeitung findet bei einem bevorzugten Ausführungsbeispiel wie in der Ausgabeeinrichtung 37 von Fig. 3 gezeigt für alle Ausgangskanäle zumindest teilweise parallel statt und ist bei manchen Ausführungsbeispielen unabhängig davon, von welchem Eingangsdatenstrom die Daten stammen. Bei anderen Ausführungsbeispielen können die Daten verschiedener Eingangsdatenströme unterschiedliche Priorität bei der Verarbeitung haben. Teilweise parallel bedeutet bei dem dargestellten Beispiel, dass z.B. in der Ausgabeeinrichtung 37 alle Einrichtungen, welche die Daten verarbeiten oder speichern (allgemein als Verarbeitungseinrichtungen bezeichnet, z.B. 38 - 312), für jeden Ausgangsdatenstrom getrennt bereitgestellt sind und somit in der Ausgabeeinrichtung 37 eine parallele Verarbeitung der Daten stattfindet. Die Sequenzer 33, 35 arbeiten hingegen für alle Datenströme, so dass hier keine parallele Verarbeitung stattfindet, weswegen bei dem dargestellten Beispiel die Verarbeitung nur teilweise parallel ist.

Bei anderen Ausführungsbeispielen kann die teilweise parallele Verarbeitung auch anders ausgestaltet sein als in Fig. 3 dargestellt. Beispielsweise können statt separater Speicher 31 für jeden Eingangsdatenstrom auch weniger Speicher bereitgestellt sein, ggfs. auch nur ein Speicher, wobei dann mehrere Eingangsdatenströme einen Speicher gemeinsam nutzen können. Andererseits kann auch ein Eingangsdatenstrom auf mehrere Speicher aufgeteilt werden, so dass das Verhältnis einer Anzahl von Eingangsdatenströmen zu einer Anzahl zugeordneter Speicher im Wesentlichen beliebig sein kann.

Auch kann mehr als ein synchroner Sequenzer 33 und/oder mehr als ein asynchroner Sequenzer 35 bereitgestellt sein, wobei dann jeder Sequenzer nur einen Teil der Speicher 31 ausliest. Für eine vollständig parallele Abarbeitung kann auch ein synchroner Sequenzer und ein asynchroner Sequenzer für jeden Eingangsdatenstrom bereitgestellt sein.

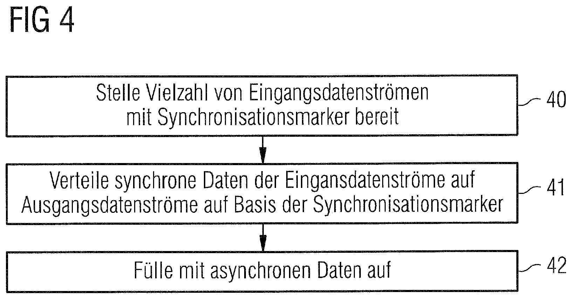

Fig. 4 zeigt ein Flussdiagramm eines Verfahrens gemäß einem Ausführungsbeispiel. Das Verfahren der Fig. 4 kann insbesondere auf Basis der vorstehend diskutierten Weiterleitungseinrichtungen der Fig. 1 bis 3 implementiert werden. Variationen, Modifikationen und Details, welche für die Ausführungsbeispiele der Fig. 1 bis 3 diskutiert wurden, sind auch auf das Verfahren der Fig. 4 anwendbar, sofern nichts anderes erläutert ist.

Bei 40 wird eine Vielzahl von Eingangsdatenströmen mit Synchronisationsmarkern bereitgestellt. Die Vielzahl von Eingangsdatenströmen kann beispielsweise aus einer Vielzahl verschiedener Quellen stammen, beispielsweise von verschiedenen Vorrichtungen eines Mikroskopsystems.

Bei 41 werden auf Basis der Synchronisationsmarker synchrone Daten der Eingangsdatenströme auf eine Vielzahl von Ausgangsdatenströmen verteilt.

Dies kann beispielsweise wie unter Bezugnahme auf Fig. 3 erläutert erfolgen. Dabei kann insbesondere sichergestellt werden, dass synchrone Daten in entsprechenden Zeitabschnitten, beispielsweise Takten, in mehreren Ausgangsdatenströmen auftreten. Hierdurch können beispielsweise Einrichtungen, welche die Ausgangsdatenströme empfangen, synchron miteinander gesteuert werden.

Optional werden bei 42 Zeitabschnitte, die nicht vollständig mit synchronen Daten gefüllt sind, mit asynchronen Daten aufgefüllt, falls solche ebenfalls zu versenden sind.

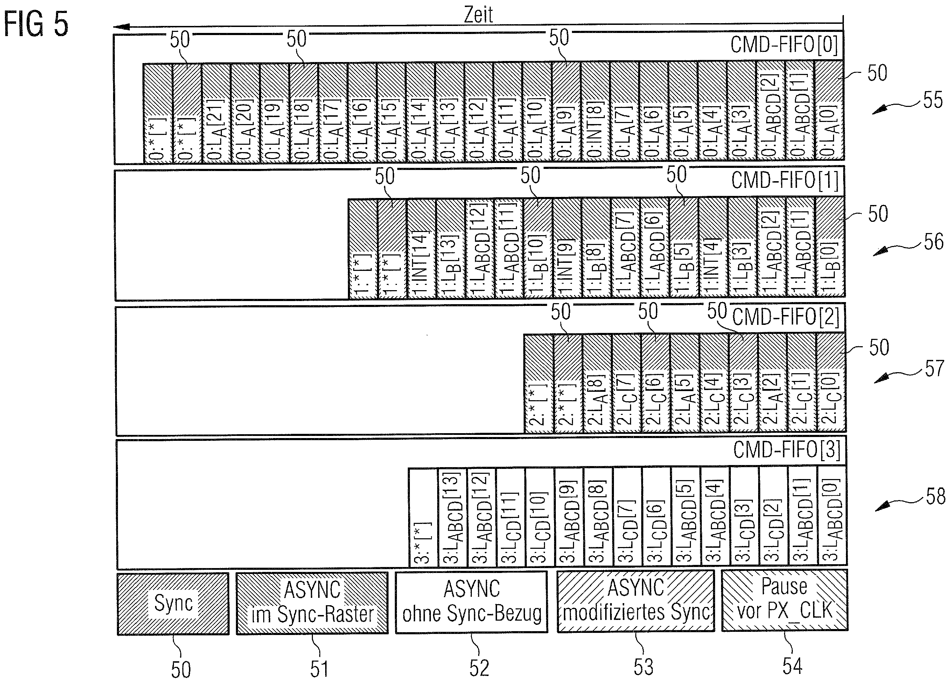

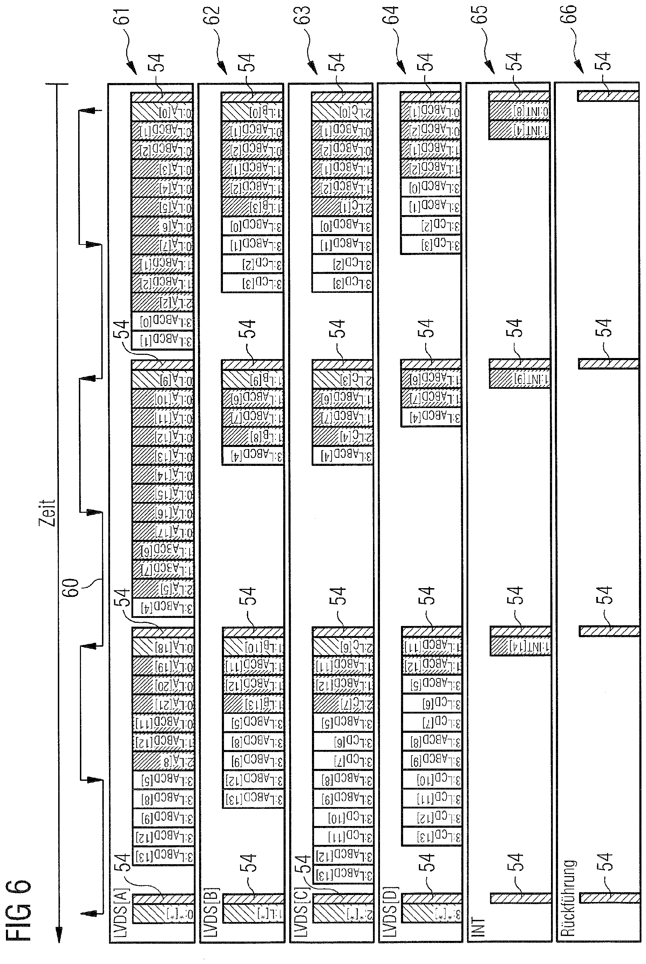

Zur weiteren Veranschaulichung der vorstehend diskutierten Weiterleitungseinrichtungen und Verfahren werden nunmehr unter Bezugnahme auf die Fig. 5 und 6 Beispiele für Datenströme erläutert, wobei in Fig. 5 Beispiele für Eingangsdatenströme und in Fig. 6 Beispiele für entsprechende Ausgangsdatenströme dargestellt sind. Es ist zu bemerken, dass diese Datenströme, insbesondere die Anzahl der Datenströme, die Anzahl der Daten sowie deren Verteilung auf die Ausgangsdatenströme, lediglich der Veranschaulichung dient und nicht als einschränkend auszulegen ist, da je nach Implementierung auch andere Werte vorliegen können.

Insbesondere sind in dem Beispiel der Fig. 5 vier Eingangsdatenströme 55 bis 58 gezeigt, und in Fig. 6 sind sechs Ausgangsdatenströme 61 bis 66 dargestellt, auf die die Daten der Eingangsdatenströme 55 bis 58 zu verteilen sind. Fig. 5 zeigt zusätzlich eine Legende, gemäß der durch verschiedene Hintergrunddarstellungen eine Art der einzelnen Datenblöcke (beispielsweise Bits, Bytes, Wörter, Datenblöcke, etc.) 50 bis 54 gekennzeichnet sind.

Die Datenströme 55 bis 57 sind dabei Datenströme mit synchronen Daten, bei welchen Daten 50 Synchronisationsmarker tragen (der Einfachheit halber im Folgenden als Synchronisationsmarker 50 bezeichnet). Derartige Synchronisationsmarker können beispielsweise durch Setzen eines hierfür reservierten Bits, durch irgendeine sonstige Kennzeichnung in den Daten oder durch zusätzliche Datenblöcke zwischen den übrigen Datenblöcken (Nutzdaten) bereitgestellt werden. Den einzelnen Synchronisationsmarkern 50 folgen dann Daten in einem durch die Synchronisationsmarker definierten Raster (Sync-Raster; in der Legende mit 51 bezeichnet), wobei beispielsweise Daten 51, die einem Synchronisationsmarker 50 bis zu einem nächsten Synchronisationsmarker 50 folgen, in einem gemeinsamen Takt oder anderen Zeitabschnitt in Ausgangsdatenströmen zu senden ist.

Die einzelnen Daten in Fig. 5 und 6 sind mit Legenden gekennzeichnet. Dabei gibt die erste Ziffer die Nummer des Eingangsdatenstroms an (0 für den Eingangsdatenstrom 55, 1 für den Eingangsdatenstrom 56, 2 für den Eingangsdatenstrom 57 und 3 für den Eingangsdatenstrom 58). Dies ist gefolgt von einem Doppelpunkt. Nach dem Doppelpunkt kommt entweder ein L, was einen Datentyp bezeichnet, der auf einen oder mehrere der Datenströme 61 bis 64 zu verteilen ist. Auf welchen Datenstrom, ist als Index nach dem L angegeben, wobei ein A für den Ausgangsdatenstrom 61, ein B für den Ausgangsdatenstrom 62, ein C für den Ausgangsdatenstrom 63 und ein D für den Ausgangsdatenstrom 64 steht. Folgt statt eines L ein INT, sind die Daten auf den Ausgangsdatenstrom 65, welcher beispielsweise einen internen Befehlskanal darstellen kann, zu verteilen. Bei diesem Ausführungsbeispiel umfasst also jeder Datenblock Informationen, welchem Ausgangsdatenstrom er zuzuordnen ist. Bei anderen Ausführungsbeispielen können auch nur manche Datenblöcke derartige Informationen umfassen, die dann z.B. für mehrere aufeinanderfolgende Datenblöcke gelten. Der Ausgangsdatenstrom 66 stellt beispielsweise einen Rückführungskanal dar, welcher zur Fehlersuche oder zu Testzwecken verwendet werden kann.

Der Eingangsdatenstrom 58 enthält asynchrone Daten ohne Synchronisationsbezug (52), welche nicht synchron in die Ausgangsdatenströme abzubilden sind.

Bei manchen Daten ist schließlich als Bezeichnung nach der ersten Ziffer *[*] angegeben. Dies deutet an, dass noch beliebig viele weitere Daten und/oder Datenströme bereitgestellt sein können, stellt also einen "Platzhalter" dar. Ansonsten steht in der eckigen Klammer die Nummer des Datums (dargestellten Datenblocks) in dem jeweiligen Datenstrom (beispielsweise von [0] bis [21] für den Eingangsdatenstrom 55, oder von [0] bis [14] für den Eingangsdatenstrom 56).

Zur Verteilung der Daten der Eingangsdatenströme 55 bis 58 auf die Ausgangsdatenströme werden beispielsweise bei einem Ausführungsbeispiel (wie bereits unter Bezugnahme auf Fig. 3 erläutert) aus allen Eingangsdatenströmen, welche zu synchronisieren sind, die Daten vom ersten Synchronisationsmarker 50 (d.h. zunächst die jeweiligen Daten [0]) bis ein Datum vor dem jeweils zweiten Synchronisationsmarker 50 gelesen. Für den ersten Datenstrom 55 wären dies beispielsweise die Daten [0] bis [8], für den zweiten Datenstrom 56 die Daten [0] bis [4], und für den dritten Datenstrom 57 die Daten [0] bis [2]. Aus dem vierten Eingangsdatenstrom 58 werden Daten bei manchen Ausführungsbeispielen von einem separaten Sequenzer (asynchron), beispielsweise dem asynchronen Sequenzer 35, gelesen. Dann werden die Daten entsprechend ihren Bestimmungsausgangsdatenströmen verteilt. Das Ergebnis ist in Fig. 6 dargestellt. Dabei zeigt 60 einen Takt, und ein Zyklus des Taktes 60 stellt ein Beispiel für einen Zeitabschnitt dar, während dem synchrone Daten zu senden sind. Ein derartiger Takt kann beispielsweise ein sogenannter Pixeltakt eines Mikroskopsystems sein. Beispielsweise kann bei einem Laserscanner-System während einer Periode des Taktes 60 ein Bildpunkt (Pixel) aufgenommen werden.

Jeder Taktzyklus (Taktperiode) des Taktes beginnt in den Ausgangsdatenströmen 61 bis 66 mit einem Pausenabschnitt 54. Danach werden die für den jeweiligen Ausgangsdatenstrom bestimmten synchronen Daten (d.h. die Daten aus den Datenströmen 55 bis 57) eingefügt, wie dies in Fig. 5 gezeigt ist. Somit ist sichergestellt, dass die synchron zu sendenden Daten wie durch die Synchronisationsmarker 50 gezeichnet in einer Taktperiode des Taktes 60 gesendet werden. Bei anderen Ausführungsbeispielen kann ein relevanter Zeitabschnitt auch mehrere Taktperioden eines Taktes umfassen oder anders bestimmt sein.

Anschließend werden, sofern Platz vorhanden, noch asynchrone Daten hinzugefügt. Dabei wird bei dem unter Bezugnahme auf bei Fig. 5 und 6 erläutertem Ausführungsbeispiel darauf geachtet, dass Daten des Datenstroms 58, welche mehreren Ausgangskanälen zugeordnet sind, in allen Ausgangsdatenströmen in einer gleichen Taktperiode gesendet werden.

So sind bei dem dargestellten Beispiel nach Einfügen der synchronen Daten in den Ausgangsdatenstrom 61 noch zwei Plätze (auch als Zeitschlitze bezeichnet) frei. Die ersten beiden Daten, welche in den Ausgangsdatenstrom 61 einzufügen sind, sind die Daten [0] und [1] des asynchronen Eingangsdatenstroms 58 (Index "A"). Bei den anderen Ausgangsdatenströmen 62, 63, 64 sind noch mehr Zeitschlitze frei. Daher können hier auch noch die Daten [2] und [3] des Eingangsdatenstroms 58 eingefügt werden, welche nicht in den Ausgangsdatenstrom 61 einzufügen sind.

Das Datum [4] des Datenstroms 58 ist wiederum in den Ausgangsdatenstrom 61 einzufügen, findet hier jedoch in der ersten Taktperiode des Taktes 60 keinen Platz mehr. Daher wird es erst in der nächsten Taktperiode am Ende eingefügt. Um dieses Datum [4] in allen zugeordneten Ausgangsdatenströmen parallel zu senden, wird es auch in den anderen Datenströmen 62 bis 64 erst in der nächsten Taktperiode eingefügt, obwohl hier noch Platz ist. Wenn diese Synchronität nicht wichtig ist, können die anderen Ausgangsdatenströme 62 bis 64 bei anderen Ausführungsbeispielen auch ebenfalls vollständig aufgefüllt werden. Beispielsweise kann das Datum [4] dann in den Ausgangsdatenströmen 62, 63 und 64 noch in der ersten Taktperiode des Taktes 60 eingefügt werden.

Diese Vorgehensweise wiederholt sich dann mit den Daten von dem jeweils zweiten Synchronisationsmarker 50 in den Eingangsdatenströmen bis zum letzten Datum vor dem dritten Synchronisationsmarker 50 (beispielsweise Daten [9] bis [17] des Eingangsdatenstroms 55 und Daten [5] bis [9] des Eingangsdatenstroms 59), wobei danach wieder mit asynchronen Daten aus dem Eingangsdatenstrom 58 aufgefüllt wird. Diese Vorgehensweise wird wiederholt, bis alle Daten übertragen wurden, was zu dem Ergebnis der Fig. 6 führt.

Es ist nochmals zu betonen, dass die Fig. 5 und 6 lediglich der weiteren Veranschaulichung dienen, und auch an eine andere Anzahl von Daten auf anderen Anzahlen von Eingangsdatenströmen und/oder Ausgangsdatenströmen übertragen werden können.

Bei den oben dargestellten Ausführungsbeispielen dienen Synchronisationsmarker der zeitlichen Synchronisation der Datenströme untereinander. Bei manchen Ausführungsbeispielen können die Datenströme zusätzlich mit Hilfe spezieller Befehle untereinander und/oder zu externen Ereignissen synchronisiert werden. Derartige Befehle können in die diskutierten Datenströme eingefügt sein. So kann mittels derartiger Befehle beispielsweise erreicht werden, dass ein Datenstrom (z.B. von der Quelle 20 der Fig. 2) zunächst wartet und erst startet, wenn ein oder mehrere andere Datenströme (z.B. von den Quellen 21 und 22) bis zu einer bestimmten Position abgearbeitet sind. Dies kann auch als inhaltliche Synchronisation bezeichnet werden. Auch eine Synchronisation zu externen Ereignissen ist möglich,. Z.B. dass ein Datenstrom bzw. dessen Verarbeitung erst startet, wenn ein externes Signal, z.B. ein Interrupt-Signal, vorliegt.

Durch die diskutierten Ausführungsbeispiele können verschiedene Vorteile realisiert werden. Einige dieser möglichen Vorteile werden im Folgenden diskutiert, wobei je nach Ausführungsbeispiel auch nur manche dieser Vorteile realisiert sein können.
- Die Datenströme können verschieden beeinflusst werden, sowohl gegenseitig als auch durch externe Vorgaben. Insbesondere können hierzu Befehle wie oben diskutiert in den Datenströmen verwendet werden
- Eine latenzarme Synchronisation von Datenströmen kann untereinander auf Basis interner oder externer Bedingungen erreicht werden, wobei die geringere Latenz insbesondere dadurch erreicht werden kann, dass keine großen Puffer nötig sind.
- Eine Anzahl der Datenströme kann variabel sein, insbesondere auch zur Laufzeit, wobei die Synchronität beibehalten werden kann. Beispielsweise können in einem Kanalausgangsdatenstrom, für den keine Daten anstehen, schlichtweg keine Daten übertragen werden (was dann beispielsweise so aussieht wie bei dem Ausgangsdatenstrom 66), und sobald Daten anstehen können diese korrekt synchronisiert werden.
- Wie bereits erwähnt, kann die Anzahl der Datenströme variiert werden; dies kann insbesondere eine konfigurierbare Verteilung einer konfigurierbaren Anzahl von Eingangsdatenströmen auf eine konfigurierbare Anzahl von Datensenken (Ausgangsdatenströmen) bedeuten.
- Die Datenverteilung und Datenverarbeitung kann dabei dynamisch und latenzarm auf verschiedene Ereignisse im System und von außen reagieren.
- Wie insbesondere unter Bezugnahme auf die Fig. 5 und 6 erläutert, kann gleichzeitig mit einer synchronen Datenausgabe eine asynchrone Datenstromausgabe erfolgen, was die Latenz der asynchronen Daten minimiert, ohne dass die synchrone Datenausgabe zeitlich beeinflusst wird.
- Es ist bei Ausführungsbeispielen keine Vorberechnung der Datenströme und deren Abhängigkeiten beispielsweise durch eine Software notwendig, da beispielsweise die Daten selbst die notwendigen Informationen zur Zuteilung an Ausgangsdatenströme beinhalten.
- Die dargestellten Techniken können gut in Hardware, beispielsweise in einem FPGA, implementiert werden. Hierdurch können echtzeitkritische Software-Implementierungen vermieden werden.

## Patentansprüche

1. Weiterleitungseinrichtung (13; 34), umfassend:
eine Vielzahl von Ausgängen (25-27), wobei die Weiterleitungseinrichtung eingerichtet ist,
eine Vielzahl von Eingangsdatenströmen (30A-30D) zu empfangen, wobei zumindest manche der Eingangsdatenströme (30A-30D) Synchronisationsmarker (50) umfassen,
welche angeben, welche Daten der Eingangsdatenströme (30A-30D) in einem gemeinsamen Zeitabschnitt auszugeben sind, wobei die Weiterleitungseinrichtung (13; 34) weiter eingerichtet ist, eine Vielzahl von Ausgangsdatenströmen (313A-313D) auf Basis der Eingangsdatenströme (30A-30D) und der Synchronisationsmarker (50) an den Ausgängen (25-27) bereitzustellen,
wobei das Verteilen derart erfolgt, dass Daten, die in einem bestimmten Zeitabschnitt zu senden sind, in allen Ausgangsdatenströmen (61-65), denen diese Daten zuzuordnen sind, in einem gleichen Zeitabschnitt bereitgestellt werden,
weiter umfassend eine Vielzahl von Speichern (31A-31D), wobei jeder Speicher der Vielzahl von Speichern (31A-31D) zum Speichern von Daten von einem der Eingangsdatenströme (30A-30D) eingerichtet ist,
weiter umfassend mindestens eine Sequenzereinrichtung (33), welche eingerichtet ist,
sukzessive Daten, welche einem Synchronisationsmarker (50) zugeordnet sind, aus der Sequenzereinrichtung zugeordneten Speichern der Speicher (31A-31D) auszulesen,
wobei die Weiterleitungseinrichtung (13; 34) weiterhin für jeden der Ausgänge einen Ausgangspuffer (39A-39D) umfasst, wobei die Sequenzereinrichtung (33) eingerichtet ist,
die gelesenen Daten in diejenigen Ausgangspuffer (39A-39D) zu schreiben, deren Ausgangsanschlüssen die Daten zuzuordnen sind, und
weiter umfassend mindestens eine weitere Sequenzereinrichtung (35), welche eingerichtet ist, nicht synchron zu übertragende Daten aus der Sequenzereinrichtung zugeordneten Speichern der Speicher (31A-31D) auszulesen und in weitere Ausgabepuffer (310A-310D) zu schreiben, wobei jeweils ein weiterer Ausgabepuffer (310A-310D) einem der Ausgänge (25-27) zugeordnet ist, wobei die Weiterleitungseinrichtung weiter für jeden Ausgang eine Kombinationseinrichtung (311A-311D) umfasst, wobei jede der Kombinationseinrichtungen (311A-311D) eingerichtet ist,
Daten aus dem Ausgabepuffer und dem weiteren Ausgabepuffer, welche einem jeweiligen Ausgang zugeordnet sind, zu einem Ausgangsdatenstrom zu kombinieren.

2. Weiterleitungseinrichtung (13; 34) nach Anspruch 1, wobei die Weiterleitungseinrichtung zumindest teilweise als Hardware implementiert ist.

3. Weiterleitungseinrichtung (13; 34) nach Anspruch 2, wobei die Hardware eine anwendungsspezifische integrierte Schaltung und/oder eine feldprogrammierbare Gatteranordnung umfasst.

4. Mikroskopsystem mit einer Weiterleitungseinrichtung (13; 34) nach einem der Ansprüche 1-3.

5. Verfahren zur Weiterleitung von Daten, umfassend:
Bereitstellen einer Vielzahl von Eingangsdatenströmen (30A-30D) an die Weiterleitungseinrichtung nach einem der Ansprüche 1-4, wobei zumindest manche der Eingangsdatenströme (30A-30D) Synchronisationsmarker (50) umfassen, welche angeben, welche Daten der Eingangsdatenströme (30A-30D) in einem gemeinsamen Zeitabschnitt auszugeben sind, und
Verteilen synchron auszugebender Daten der Eingangsdatenströme (30A-30D) auf eine Vielzahl von Ausgangsdatenströme (61-66) durch die Weiterleitungseinrichtung auf Basis der Synchronisationsmarker (50),
wobei das Verteilen derart erfolgt, dass Daten, die in einem bestimmten Zeitabschnitt zu senden sind, in allen Ausgangsdatenströmen (61-65), denen diese Daten zuzuordnen sind, in einem gleichen Zeitabschnitt bereitgestellt werden.

6. Verfahren nach Anspruch 5, wobei das Bereitstellen der Eingangsdatenströme (30A-30D) ein Speichern der Eingangsdatenströme in einem jeweils zugeordneten Speicher (31A-31D) der Weiterleitungseinrichtung umfasst.

7. Verfahren nach Anspruch 5 oder 6, wobei das Verfahren ein sukzessives Auslesen der Vielzahl von Eingangsdatenströmen (30A-30D), wobei jeweils aus jedem Eingangsdatenstrom (30A-30D) einem Synchronisationsmarker (50) zugeordnete Daten (51) ausgelesen werden, und ein Verteilen der so ausgelesenen Daten auf die Ausgangsdatenströme durch die Weiterleitungseinrichtung umfasst.

8. Verfahren nach Anspruch 7, wobei das sukzessive Auslesen und das Verteilen dann jeweils für einen jeweiligen nächsten Synchronisationsmarker (50) der Eingangsdatenströme (30A-30D) wiederholt wird.

9. Verfahren nach einem der Ansprüche 5-8, weiter umfassend Auffüllen von Zeitabschnitten der Ausgangsdatenströme (61-66) mit nicht synchron zu übertragenen Daten durch die Weiterleitungseinrichtung.

10. Verfahren nach Anspruch 9, wobei das Auffüllen derart erfolgt, dass Daten der Eingangsdatenströme (30A-30D), welche in mehreren Ausgangsdatenströmen (61-66) bereitzustellen sind, in den Ausgangsdatenströmen (61-66) in einander entsprechenden Zeitabschnitten bereitgestellt werden.

11. Verfahren nach einem der Ansprüche 5-10, wobei die Daten Befehle zur Synchronisation der Eingangsdatenströme und/oder Ausgangsdatenströme untereinander und/oder zu externen Ereignissen umfassen.

12. Verfahren nach einem der Ansprüche 5-11, wobei die Daten der Eingangsdatenströme (30A-30D) Informationen aufweisen, welchem Ausgangsdatenstrom der Ausgangsdatenströme (61-66) sie zuzuordnen sind.

## Claims

1. Forwarding device (13; 34), comprising:
a multiplicity of outputs (25-27), wherein the forwarding device is configured to receive a multiplicity of input data streams (30A-30D), wherein at least some of the input data streams (30A-30D) comprise synchronization markers (50) indicating which data of the input data streams (30A-30D) need to be output in a common time period, wherein the forwarding device (13; 34) is further configured to provide a multiplicity of output data streams (313A-313D) at the outputs (25-27) on the basis of the input data streams (30A-30D) and the synchronization markers (50),
wherein the distributing is effected such that data that need to be sent in a specific time period are provided in an identical time period in all output data streams (61-65) to which these data need to be assigned, further comprising a multiplicity of memories (31A-31D),
wherein each memory from the multiplicity of memories (31A-31D) is configured to store data from one of the input data streams (30A-30D),
further comprising at least one sequencer device (33) configured to gradually read data assigned to a synchronization marker (50) from such memories from the memories (31A-31D) as are assigned to the sequencer device,
wherein the forwarding device (13; 34) furthermore comprises an output buffer (39A-39D) for each of the outputs, wherein the sequencer device (33) is configured to write the read data to those output buffers (39A-39D) to whose output connections the data need to be assigned,
and
further comprising at least one further sequencer device (35), which is configured to read data that do not need to be transmitted synchronously from such memories from the memories (31A-31D) as are assigned to the sequencer device and to write said data to further output buffers (310A-310D), wherein a further output buffer (310A-310D) is respectively assigned to one of the outputs (25-27),
wherein the forwarding device further comprises a combination device (311A-311D) for each output, wherein
each of the combination devices (311A-311D) is configured to combine data from the output buffer and the further output buffer that are assigned to a respective output to form an output data stream.

2. Forwarding device (13; 34) according to Claim 1, wherein at least part of the forwarding device is implemented as hardware.

3. Forwarding device (13; 34) according to Claim 2, wherein the hardware comprises an application-specific integrated circuit and/or a field-programmable gate array.

4. Microscopy system having a forwarding device (13; 34) according to one of Claims 1-3.

5. Method for forwarding data, comprising:
providing a multiplicity of input data streams (30A-30D) to the forwarding device according to one of Claims 1-4,
wherein at least some of the input data streams (30A-30D) comprise synchronization markers (50) indicating which data of the input data streams (30A-30D) need to be output in a common time period, and
distributing data that need to be output in sync from the input data streams (30A-30D) over a multiplicity of output data streams (61-66) by means of the forwarding device on the basis of the synchronization markers (50),
wherein the distributing is effected such that data that need to be sent in a specific time period are provided in an identical time period in all output data streams (61-65) to which these data need to be assigned.

6. Method according to Claim 5, wherein the providing of the input data streams (30A-30D) comprises storing the input data streams in a respective assigned memory (31A-31D) of the forwarding device.

7. Method according to Claim 5 or 6, wherein the method comprises gradually reading the multiplicity of input data streams (30A-30D), wherein data (51) assigned to a synchronization marker (50) are respectively read from each input data stream (30A-30D), and distributing the data thus read over the output data streams by means of the forwarding device.

8. Method according to Claim 7, wherein the gradual reading and the distributing are then each repeated for a respective next synchronization marker (50) of the input data streams (30A-30D).

9. Method according to one of Claims 5-8, further comprising filling time periods of the output data streams (61-66) with data that do not need to be transmitted in sync by means of the forwarding device.

10. Method according to Claim 9, wherein the filling is effected such that data of the input data streams (30A-30D) that need to be provided in multiple output data streams (61-66) are provided in the output data streams (61-66) in mutually corresponding time periods.

11. Method according to one of Claims 5-10, wherein the data comprise commands for synchronizing the input data streams and/or output data streams among one another and/or with respect to external events.

12. Method according to one of Claims 5-11, wherein the data of the input data streams (30A-30D) have information concerning which output data stream from the output data streams (61-66) they need to be assigned to.

## Revendications

1. Dispositif de transmission (13 ; 34) comprenant :
une pluralité de sorties (25-27), dans lequel le dispositif de transmission est conçu pour recevoir une pluralité de flux de données d'entrée (30A-30D), dans lequel au moins certains des flux de données d'entrée (30A-30D) comprennent des repères de synchronisation (50) indiquant quelles données des flux de données d'entrée (30A-30D) doivent être fournies en sortie au cours d'une période de temps commune, dans lequel le dispositif de transmission (13 ; 34) est en outre conçu pour fournir une pluralité de flux de données de sortie (313A-313D) sur la base des flux de données d'entrée (30A-30D) et des repères de synchronisation (50) au niveau desdites sorties (25-27),
dans lequel la distribution est effectuée de telle sorte que les données à transmettre au cours d'une période de temps déterminée sont fournies dans tous les flux de données de sortie (61-65) auxquels lesdites données doivent être associées au cours d'une même période de temps,
comprenant en outre une pluralité de mémoires (31A-31D),
dans lequel chaque mémoire de la pluralité de mémoires (31A-31D) est conçue pour stocker des données provenant de l'un des flux de données d'entrée (30A-30D),
comprenant en outre au moins un dispositif séquenceur (33),
qui est conçu pour lire des données successives associées à un repère de synchronisation (50) à partir des mémoires associées au dispositif séquenceur parmi lesdites mémoires (31A-31D),
dans lequel le dispositif de transmission (13 ; 34) comprend en outre un tampon de sortie (39A-39D) pour chacune des sorties, dans lequel le dispositif séquenceur (33) est conçu pour écrire les données lues dans les tampons de sortie (39A-39D) aux bornes de sortie desquels les données doivent être associées, et
comprenant en outre au moins un autre dispositif séquenceur (35) qui est conçu pour lire des données qui ne doivent pas être transmises de manière synchrone à partir des mémoires du dispositif séquenceur (31A-31D) et pour les écrire dans d'autres tampons de sortie (310A-310D), dans lequel un autre tampon de sortie (310A-310D) est respectivement associé à l'une des sorties (25-27), dans lequel le dispositif de transmission comprend en outre un dispositif de combinaison (311A-311D) pour chaque sortie, dans lequel chacun des dispositifs de combinaison (311A-311D) est conçu pour combiner des données provenant du tampon de sortie et de l'autre tampon de sortie, qui sont associés à une sortie respective, en un flux de données de sortie.

2. Dispositif de transmission (13 ; 34) selon la revendication 1, dans lequel le dispositif de transmission est au moins partiellement mis en œuvre sous forme de matériel.

3. Dispositif de transmission (13 ; 34) selon la revendication 2, dans lequel le matériel comprend un circuit intégré spécifique d'application et/ou un système de portes programmable sur le terrain.

4. Système de microscope doté d'un dispositif de transmission (13 ; 34) selon l'une des revendications 1-3.

5. Procédé de transmission de données, comprenant :
la fourniture d'une pluralité de flux de données d'entrée (30A-30D) au dispositif de transmission selon l'une des revendications 1 à 4, dans lequel au moins certains des flux de données d'entrée (30A-30D) comprennent des repères de synchronisation (50) indiquant quelles données des flux de données d'entrée (30A-30D) doivent être fournies en sortie au cours d'une période de temps commune, et
la distribution de données des flux de données d'entrée (30A-30D) devant être fournies en sortie de manière synchrone en une pluralité de flux de données de sortie (61-66) par le dispositif de transmission sur la base des repères de synchronisation (50),
dans lequel la distribution est effectuée de telle manière que les données à transmettre au cours d'une période de temps déterminée sont fournies dans tous les flux de données de sortie (61-65) auxquels ces données doivent être associées au cours d'une même période de temps.

6. Procédé selon la revendication 5, dans lequel la fourniture des flux de données d'entrée (30A-30D) comprend le stockage des flux de données d'entrée dans une mémoire respectivement associée (31A-31D) du dispositif de transmission.

7. Procédé selon la revendication 5 ou 6, dans lequel le procédé comprend une lecture successive de la pluralité de flux de données d'entrée (30A-30D), dans lequel les données (51) associées à un repère de synchronisation (50) sont lues à partir de chaque flux de données d'entrée (30A-30D), et une distribution des données ainsi lues en les flux de données de sortie par le dispositif de transmission.

8. Procédé selon la revendication 7, dans lequel la lecture et la distribution successives sont ensuite répétées pour un repère de synchronisation (50) suivant respectif des flux de données d'entrée (30A-30D).

9. Procédé selon l'une des revendications 5-8, comprenant en outre le remplissage de périodes de temps des flux de données de sortie (61-66) avec des données ne devant pas être transmises de manière synchrone par le dispositif de transmission.

10. Procédé selon la revendication 9, dans lequel le remplissage est effectué de telle manière que les données des flux de données d'entrée (30A-30D) devant être fournies dans plusieurs flux de données de sortie (61-66) sont fournies dans les flux de données de sortie (61-66) au cours de périodes de temps se correspondant mutuellement.

11. Procédé selon l'une des revendications 5-10, dans lequel les données comprennent des instructions pour la synchronisation des flux de données d'entrée et/ou des flux de données de sortie les uns avec les autres et/ou avec des événements externes.

12. Procédé selon l'une des revendications 5-11, dans lequel les données des flux de données d'entrée (30A-30D) comprennent des informations indiquant à quel flux de données de sortie doivent être associés les flux de données de sortie (61-66).
